# EUROPEAN PATENT APPLICATION

(11) **EP 3 461 169 A1**
(43) Date of publication of application: **27.03.2019**
(21) Application number: 17799408.4
(22) Date of filing: 17.05.2017
(51) Int. Cl.: H04W 28/04

(54) **USER TERMINAL AND WIRELESS COMMUNICATION METHOD**

(30) Priority: 18.05.2016 JP 2016099288
(71) Applicant: NTT DOCOMO, INC., Chiyoda-ku Tokyo 100-6150 (JP)
(72) Inventor: HARADA, Hiroki, Tokyo 100-6150 (JP); NAGATA, Satoshi, Tokyo 100-6150 (JP); JIANG, Yu, Beijing 100190 (CN); LIU, Liu, Beijing 100190 (CN)
(74) Representative: Hoffmann Eitle
(86) International application number: PCT/JP2017/018450
(87) International publication number: WO 2017/199984

(57) **Abstract**

The present invention is designed to prevent gaps in the understanding of redundancy version values between radio base stations and user terminal when asynchronous retransmission control is executed. A user terminal according to one aspect of the present invention has a transmission section that transmits uplink (UL) data, and a control section that controls transmission of the UL data based on retransmission control information from a radio base station, and the control section determines the value of a redundancy version (RV) to apply to the UL data, transmitted with the same HARQ process number (HPN), based on a predetermined rule, and the transmission section transmits RV information, which indicates the value of the RV, with the UL data.

## Description

### Technical Field

The present invention relates to a user terminal and a radio communication method in next-generation mobile communication systems.

### Background Art

In the UMTS Universal Mobile Telecommunications System) network, the specifications of long-term evolution (LTE) have been drafted for the purpose of further increasing high speed data rates, providing lower delays and so on (see non-patent literature 1). Also, the specifications of LTE-A (also referred to as LTE-advanced, LTE Rel. 10, 11, 12 or 13, etc.) have been drafted for further broadbandization and increased speed beyond LTE (also referred to as LTE Rel. 8 or 9), and successor systems of LTE (also referred to as, for example, FRA (Future Radio Access), 5G (5th generation mobile communication system), NR (New RAT (Radio Access Technology)), LTE Rel. 14 and alter versions, and so on) are under study.

The specifications of Rel. 8 to 12 LTE have been drafted assuming exclusive operation in frequency bands that are licensed to operators (also referred to as "licensed bands"). As licensed bands, for example, 800 MHz, 1.7 GHz and 2 GHz are used.

In recent years, user traffic has been increasing steeply following the spread of high-performance user terminals (UE (User Equipment)) such as smart-phones and tablets. Although more frequency bands need to be added to accommodate this increasing user traffic, licensed bands have limited spectra (licensed spectra).

Consequently, a study is in progress with Rel. 13 LTE to enhance the frequencies of LTE systems by using bands of unlicensed spectra (also referred to as "unlicensed bands") that are available for use apart from licensed bands (see non-patent literature 2). For example, the 2.4 GHz band and the 5 GHz band, where Wi-Fi (registered trademark) and Bluetooth (registered trademark) can be used, are under study for use as unlicensed bands.

To be more specific, with Rel. 13 LTE, a study is in progress to execute carrier aggregation (CA) between licensed bands and unlicensed bands. Communication that is carried out by using unlicensed bands with licensed bands like this is referred to as "LAA" (License-Assisted Access). Note that, in the future, dual connectivity (DC) between licensed bands and unlicensed bands and stand-alone (SA) of unlicensed bands may become the subject of study under LAA.

### Citation List

### Non-Patent Literature

Non-Patent Literature 1: 3GPP TS36.300 V8.12.0 "Evolved Universal Terrestrial Radio Access (E-UTRA) and Evolved Universal Terrestrial Radio Access Network (E-UTRAN); Overall description; Stage 2 (Release 8)," April 2010
Non-Patent Literature 2: AT&T, "Drivers, Benefits and Challenges for LTE in Unlicensed Spectrum," 3GPP TSG RAN Meeting #62 RP-131701

### Summary of Invention

### Technical Problem

In the uplink (UL) of unlicensed bands, it is assumed that retransmission of UL data is controlled asynchronously (HARQ (Hybrid Automatic Repeat reQuest)). In addition, for the UL of unlicensed bands, a study is in progress to support multi-subframe scheduling, in which, by using a single downlink control information (DCI) (for example, a UL grant), UL data transmission in multiple subframes is scheduled.

However, when asynchronous retransmission control (also referred to as "asynchronous HARQ" and so on) is performed in the UL of unlicensed bands, providing support for multi-subframe scheduling may cause gaps in the understanding of the values of redundancy versions (RVs) (redundancy version values) that are applied to UL data, between radio base station and user terminals. Such a problem may also occur when single-subframe scheduling is used, in which transmission of a single subframe is scheduled using a single DCI.

The present invention has been made in view of the above, and it is therefore an object of the present invention to provide a user terminal and a radio communication method, whereby it is possible to prevent gaps in the understanding of redundancy version values from forming between radio base stations and user terminals when asynchronous retransmission control is executed.

### Solution to Problem

In accordance with one aspect of the present invention, a user terminal has a transmission section that transmits uplink (UL) data, and a control section that controls transmission of the UL data based on retransmission control information from a radio base station, and, in this user terminal, the control section determines the value of a redundancy version (RV) to apply to the UL data, transmitted with the same HARQ process number (HPN), based on a predetermined rule, and the transmission section transmits RV information, which indicates the value of the RV, with the UL data.

### Advantageous Effects of Invention

According to the present invention, it is possible to prevent gaps in the understanding of redundancy version values between radio base stations and user terminals when asynchronous retransmission control is executed.

### Brief Description of Drawings

FIGs. 1A and 1B are diagrams to show examples of multi-subframe scheduling;
FIG. 2 is a diagram to show an example of applying RV values to UL data;
FIG. 3 is a diagram to show an example of a gap in the understanding of an RV value;
FIGs. 4A and 4B are diagrams to show an example of transmitting RV information according to present embodiment;
FIGs. 5A to 5C are diagrams to show examples of encoding RV information according to present embodiment;
FIGs. 6A and 6B are diagrams to show examples of transmitting RV information upon application of multi-subframe scheduling according to present embodiment;
FIG. 7 is a diagram to show an example of a schematic structure of a radio communication system according to the present embodiment;
FIG. 8 is a diagram to show an example of an overall structure of a radio base station according to the present embodiment;
FIG. 9 is a diagram to show an example of a functional structure of a radio base station according to the present embodiment;
FIG. 10 is a diagram to show an example of an overall structure of a user terminal according to the present embodiment;
FIG. 11 is a diagram to show an example of a functional structure of a user terminal according to the present embodiment; and
FIG. 12 is a diagram to show an example hardware structure of a radio base station and a user terminal according to the present embodiment.

### Description of Embodiments

In systems that run LTE/LTE-A in unlicensed bands (for example, LAA systems), interference control functionality is likely to be necessary in order to allow co-presence with other operators' LTE, Wi-Fi and/or other systems. Note that systems that run LTE/LTE-A in unlicensed bands may be collectively referred to as "LAA," "LAA-LTE," "LTE-U," "U-LTE" and so on, regardless of whether the mode of operation is CA, DC or SA.

Generally speaking, when a transmission point (for example, a radio base station (eNB (eNodeB)), a user terminal (UE (User Equipment)), and so on) that communicates by using a carrier (which may also be referred to as a "carrier frequency," or simply a "frequency") of an unlicensed band detects another entity (for example, another user terminal) that is communicating in this unlicensed band carrier, the transmission point is disallowed to make transmission in this carrier.

Therefore, the transmission point performs "listening" (LBT (Listen Before Talk)) at a timing a predetermined period before a transmission timing. To be more specific, by executing LBT, the transmission point searches the whole of the target carrier band (for example, one component carrier (CC)) at a timing that is a predetermined period before a transmission timing, and checks whether or not there are other pieces of apparatus (for example, radio base stations, user terminals, Wi-Fi apparatus and so on) communicating in this carrier band.

Note that, in the present specification, "listening" refers to the operation which a given transmission point (for example, a radio base station, a user terminal, etc.) performs before transmitting signals, in order to check whether or not signals to exceed a predetermined level (for example, predetermined power) are being transmitted from other transmission points. Furthermore, the listening performed by radio base stations and/or user terminals may be referred to as "LBT," "CCA" (Clear Channel Assessment), "carrier sensing," or the like.

The transmission point then carries out transmission using this carrier only if it is confirmed that no other apparatus is communicating. If the received power measured during LBT (the received signal power during the LBT period) is equal to or lower than a predetermined threshold, the transmission point judges that the channel is in the idle state (LBT_{idle}), and carries out transmission. When a "channel is in the idle state," this means that, in other words, the channel is not occupied by a specific system, and it is equally possible to say that a channel is "idle," a channel is "clear," a channel is "free," and so on.

On the other hand, if only just a portion of the target carrier band is detected to be used by another piece of apparatus, the transmission point stops its transmission. For example, if the transmission point detects that the received power of a signal from another piece of apparatus in this band exceeds a predetermined threshold, the transmission point judges the channel is in the busy state (LBT_{busy}), and makes no transmission. In the event LBT_{busy} is yielded, LBT is carried out again with respect to this channel, and the channel becomes available for use only after the idle state is confirmed. Note that the method of judging whether a channel is in the idle state/busy state based on LBT is by no means limited to this.

As LBT mechanisms (schemes), FBE (Frame Based Equipment) and LBE (Load Based Equipment) are currently under study. Differences between these include the frame configurations to use for transmission/receipt, the channel-occupying time, and so on. In FBE, the LBT-related transmitting/receiving configurations have fixed timings. Also, LBE, in which the LBT-related transmitting/receiving configurations are not fixed in the time direction, and in which LBT is carried out on an as-needed basis, is also referred to as "category 4" and so on. Note that when transmission is performed without LBT, it is also referred to as "category 1."

To be more specific, FBE has a fixed frame cycle, and is a mechanism of carrying out transmission if the result of executing carrier sensing for a certain period (which may be referred to as "LBT duration" and so on) in a predetermined frame shows that a channel is available for use, and not making transmission but waiting until the next carrier sensing timing if no channel is available.

On the other hand, LBE refers to a mechanism for implementing the ECCA (Extended CCA) procedure of extending the duration of carrier sensing when the result of carrier sensing (initial CCA) shows that no channel is available for use, and continuing executing carrier sensing until a channel is available. In LBE, random backoff is required to adequately avoid contention.

Note that the duration of carrier sensing (also referred to as the "carrier sensing period") refers to the time (for example, the duration of one symbol) it takes to gain one LBT result by performing listening and/or other processes and deciding whether or not a channel can be used.

A transmission point can transmit a predetermined signal (for example, a channel reservation signal) based on the result of LBT. Here, the result of LBT refers to information about the state of channel availability (for example, "LBT_{idle}," "LBT_{busy}," etc.), which is acquired by LBT in carriers where LBT is configured.

Also, when a transmission point starts transmission when the LBT result shows the idle state (LBT_{idle}), the transmission point can skip LBT and carry out transmission for a predetermined period (for example, for 10 to 13 ms). This transmission is also referred to as "burst transmission," "burst," "transmission burst," and so on.

As described above, by introducing interference control that is based on LBT mechanism and that is for use within the same frequency to transmission points in LAA systems, it becomes possible to prevent interference between LAA and Wi-Fi, interference between LAA systems and so on. Furthermore, even when transmission points are controlled independently per operator that runs an LAA system, LBT makes it possible to reduce interference without learning the details of each operator's control.

Also, in LAA systems, user terminals performs RRM (Radio Resource Management) measurements to detect unlicensed band cells (SCells (Secondary Cells)) (including RSRP (Reference Signal Received Power) measurements, etc.). As a signal for making RRM measurements, the discovery reference signal (DRS) is under study for use.

The DRS for use in LAA systems may be formed by including at least one of synchronization signals (PSS (Primary Synchronization Signal)/SSS (Secondary Synchronization Signal)), a cell-specific reference signal (CRS) and a channel state information reference signal (CSI-RS). The DRS is transmitted in a DMTC duration of a predetermined periodicity (also referred to as the "DMTC (Discovery Measurement Timing Configuration) periodicity")). Note that this DRS may be referred to as a "detection signal," a "detection measurement signal," a "discovery signal" (DS), an "LAA DRS," an "LAA DS," or the like.

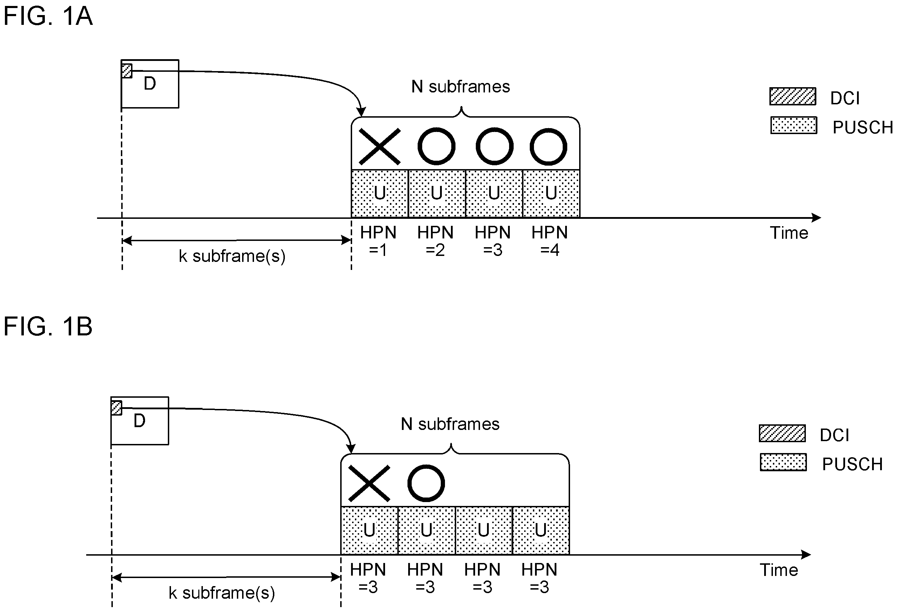

In addition, in LAA systems, the user terminal measures CSI by using the CRS and/or the CSI-RS (hereinafter "CRS/CSI-RS") transmitted in unlicensed band cells, and reports the measurement result to the radio base station (CSI reporting). Note that, the CRS may be the CRS included in each subframe in which downlink transmission is performed, or may be the CRS that constitutes the DRS (see FIGs. 1A and 1B, for example). Furthermore, the CSI-RS is a CSI-RS that is transmitted in a predetermined cycle (for example, 5 ms, 10 ms, etc.), and configured apart from the CSI-RS constituting the DRS.

Now, targeting at the UL of unlicensed bands, a study is in progress to support asynchronous retransmission control (asynchronous HARQ). In synchronous retransmission control (synchronous HARQ), UL data of each HARQ process is retransmitted a fixed period after the initial transmission of the UL data. On the other hand, in asynchronous HARQ, UL data of each HARQ process is retransmitted an unfixed period after the initial transmission of the UL data.

In asynchronous HARQ, control information related to UL data retransmission (also referred to as "ACK (Acknowledgment)" or "NACK (Negative ACK)," "HARQ-ACK," and so on) is transmitted from the radio base station to the user terminal at an arbitrary timing. For example, the radio base station may include control information related to UL data retransmission in DCI (for example, a UL grant) and transmit this, and, based on the retransmission control information included in the DCI, the user terminal may perform the initial transmission or retransmission of UL data by using an uplink shared channel (PUSCH (Physical Uplink Shared Channel)) allocated by the DCI.

Also, the DCI (for example, a UL grant), which includes control information related to retransmission of the UL data, may include at least one of the HARQ process number (HPN) of the UL data, a new data indicator (NDI), and the redundancy version (RV) that is applied to the UL data.

Here, the HARQ process number (HPN) is identification information of the HARQ process, which is the unit of processing in retransmission control. Multiple HARQ processes are configured in the user terminal, and UL data retransmission control is performed per HARQ process. Usually, in an HARQ process of the same HPN, after the initial transmission of UL data, this UL data is retransmitted until an ACK is received. By including the HPN in DCI, even when asynchronous HARQ is employed, the user terminal can identify which HPN's UL data should be retransmitted.

Also, the new data indicator (NDI) indicates whether the UL data is transmitted in the initial transmission or in retransmission. For example, if an NDI for data of the same HPN is not toggled (that is, has the same value as last time), the NDI may indicate that the UL data is retransmitted, and, if the NDI is toggled (that is, has a different value from last time), the NDI may indicate that the initial transmission of UL data is performed.

In addition, the redundancy version (RV) is used for coding and rate matching of UL data, and indicates differences of UL data in redundancy. The values of redundancy versions (hereinafter referred to as "RV values") are, for example, 0, 1, 2 and 3, and 0 is used for the initial transmission because the degree of redundancy is the lowest. By applying different RV values every time UL data of the same HPN is transmitted, the possibility of successfully receiving (decoding) UL data increases, so that HARQ gain can be effectively achieved. By including RVs in DCI, it is possible to prevent gaps in the understanding of RVs between radio base stations and user terminals.

Also, for the UL of unlicensed bands, a study is underway to support multi-subframe scheduling where DCI in one subframe schedules PUSCH transmission in multiple subframes.

FIGs. 1 are diagrams to show examples of multi-subframe scheduling. As shown in FIGs. 1, in multi-subframe scheduling, PUSCH transmission in N (N≥1) subframes after k (k≥1) subframes is scheduled by DCI in one subframe. Note that N subframes may be continuous subframes or discontinuous subframes.

Note that the DCIs of FIGs. 1 may be each a single DCI that schedules N subframes, or these DCIs may be N DCIs that schedule N subframes, respectively. When a single DCI is used, this DCI may include information indicating the number of subframes (N) to be scheduled (for example, the value of the UL index field).

FIG. 1A shows a case where UL data (transport blocks (TBs)) of varying HPNs are scheduled in N subframes. In the case of FIG. 1A, the user terminal can transmit UL data, continuously, from the timing listening succeeds. For example, in FIG. 1A, since listening succeeds in (or immediately before) the second subframe, the user terminal can transmit UL data (UL data of HPN=2, 3 and 4) of varying HPNs in the second and subsequent subframes. In FIG. 1A, UL data of HPN=1 that could not be transmitted due to a listening failure is rescheduled by another DCI.

FIG. 1B shows a case where UL data of the same HPN is scheduled in N subframes. In the case of FIG. 1B, the user terminal transmits UL data in the first subframe where listening succeeds, and does not have to transmit UL data in subsequent subframes. For example, in FIG. 1B, listening succeeds in (or immediately before) the second subframe, so that the user terminal transmits UL data in the second subframe, and does not transmit UL data in the third and subsequent subframes.

In the case of FIG. 1B, even if listening fails in (or immediately before) the first subframe, there is a high possibility that listening will succeed and UL data can be transmitted in (or immediately before) the following subframe. Therefore, as shown in FIG. 1A, the latency time can be reduced compared to when UL data that could not be transmitted due to a failure of listening is scheduled again by DCI.

In addition, in the case of FIG. 1B, UL data of the same HPN can be transmitted not only in the first subframe where listening succeeds but also in subsequent subframes. In this case, different RV values may be applied to the UL data of the same HPN between subframes after the subframe where listening succeeds.

When applying asynchronous HARQ to multi-subframe scheduling described above, if the RV values to apply to the UL data of each subframe are included in DCI and reported, the overhead may increase. On the other hand, if a fixed RV value is applied every time UL data of the same HPN is retransmitted, HARQ gain may not be achieved effectively.

Therefore, every time UL data of the same HPN is transmitted, it is desirable to change the RV value, implicitly, according to predetermined rules. For example, the RV value "0" may be applied to the first transmission data (initial transmission), the RV value "2" may be applied to the second transmission data (retransmission data), the RV value "3" may be applied to the third transmission data (retransmission data), and the RV value "1" may be applied to the fourth transmission data (retransmission data).

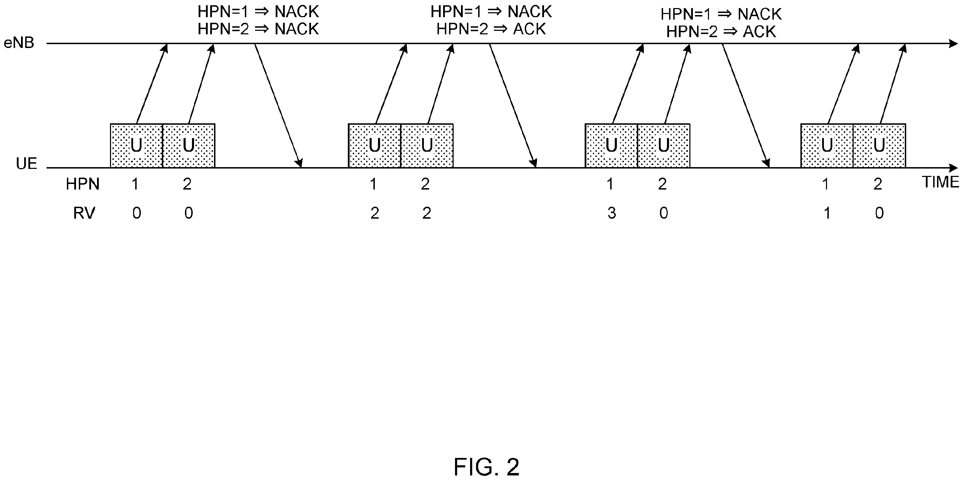

FIG. 2 is a diagram to show an example of applying RV values to UL data. Note that, although FIG. 2 shows a case where two subframes are scheduled by a single DCI, this is by no means limiting. In addition, although FIG. 2 shows HPNs=1 and 2, the HPNs are by no means limited to these. Furthermore, in FIG. 2, according to a predetermined rule, different RV values "0→2→3→1" are applied, on a per transmission basis, to the same UL data that is transmitted with the same HPN.

In FIG. 2, the radio base station fails to receive (decode) the first transmission data of HPNs=1 and 2, and transmits NACKs to the user terminal in response to HPNs=1 and 2. Since this data transmission is the initial transmission, the RV value "0" is applied. The user terminal retransmits the transmission data with HPNs=1 and 2, respectively, in response to the NACKs from the radio base station. The RV value "2" is applied to the second transmission data in accordance with a predetermined rule.

In FIG. 2, the radio base station fails to receive (decode) the second transmission data of HPN=1, and successfully receives (decodes) the second transmission data of HPN=2. Therefore, the radio base station transmits a NACK in response to HPN=1, while transmitting an ACK in response to HPN=2. The user terminal retransmits the transmission data in response to the NACK returned from the radio base station in response to HPN=1. The RV value "3" is applied to the third transmission data in accordance with a predetermined rule. Meanwhile, the user terminal transmits new transmission data in the initial transmission, in response to the ACK that is returned from the radio base station in response to HPN=2. The RV value "0" is applied to the new transmission data in accordance with a predetermined rule.

Likewise, the radio base station fails to receive (decode) the third transmission data of HPN=1, and transmits a NACK in response to HPN=1. The user terminal retransmits the transmission data in response to the NACK returned from the radio base station in response to HPN=1. The RV value "1" is applied to the fourth transmission data in accordance with a predetermined rule. Meanwhile, the user terminal transmits new transmission data in the initial transmission in response to the ACK returned from the radio base station in response to HPN=2.

As described above, when the RV value to apply to UL data of the same HPN is changed implicitly without explicit signaling of RV values, there is a risk that the understanding of RV values may no longer match between the radio base station and the user terminal.

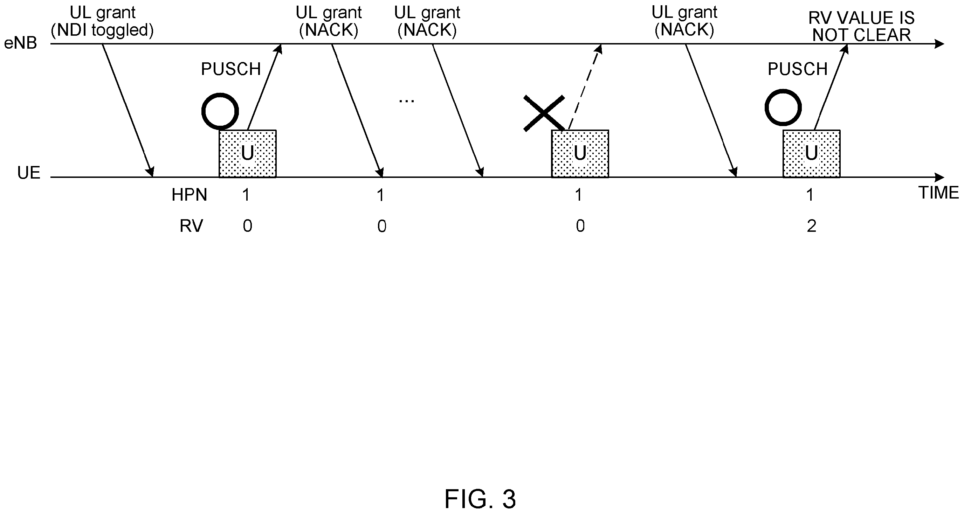

FIG. 3 is a diagram to show an example of a gap in the understanding of an RV value between the radio base station and the user terminal. Note that, although a case will be described below with reference to FIG. 3 where there is a gap in the understanding of the RV values to apply to the UL data of HPN=1, obviously, this gap in understanding forms when UL data of multiple HPNs is subjected to multi-subframe scheduling. Also, assume that, in FIG. 3, the RV value to apply to UL data of the same HPN is changed implicitly based on the same rules as in FIG. 2.

In FIG. 3, the user terminal receives a UL grant with HPN=1 from the radio base station. Since this UL grant includes a toggled NDI, the user terminal performs the initial transmission of new data with HPN=1. The RV value "0" is applied to this new data. Since the radio base station fails to receive (decode) this new data, the radio base station transmits a UL grant including a NACK, in expectation that UL data to which the RV value "2" is applied will be retransmitted.

Here, if the user terminal is unable to receive the UL grant including a NACK from the radio base station, the radio base station cannot judge, (1) whether the user terminal has failed to receive the UL grant, (2) whether the user terminal has successfully detected the UL grant but failed listening when transmitting retransmission data to which the RV value "2" is applied, or (3) whether the user terminal has succeeded in listening and transmitted retransmission data, but the radio base station has nevertheless failed to receive (detect) the retransmission data.

As a result of this, as shown in FIG. 3, when at least one of the case where the user terminal fails to receive the UL grant including a NACK, the case where the user terminal successfully receives the UL grant, but fails listening in or immediately before the subframe scheduled by the UL grant, and the case where the user terminal successfully receives the UL grant and succeeds in listening occurs, the radio base station cannot judge which RV value is applied to the retransmission data.

So, in accordance with one aspect of the present invention, the present inventors have come up with the idea of preventing gaps in the understanding of RV values between radio base stations and user terminals by transmitting RV information that indicates RV values, with UL data, when asynchronous HARQ is used.

Now, embodiments of the present invention will be described below in detail with reference to the accompanying drawings. Note that the present embodiment can be applied to any cells (carriers) only if asynchronous HARQ is used, regardless of licensed bands or unlicensed bands. Also, the present embodiment is applicable to any cells only if listening is configured, regardless of licensed bands or unlicensed bands.

Furthermore, although the following description will assume cases where multi-subframe scheduling is performed, the present embodiment can also be applied to single-subframe scheduling as well. Also, although cases will be described below as examples where retransmission control information (ACK/NACK) for UL data is transmitted in DCI (for example, a UL grant), retransmission control information may be communicated apart from DCI (for example, in a retransmission control channel such as PHICH (Physical Hybrid-ARQ Indicator CHannel)).

### (First Aspect)

According to the first aspect of the present invention, the user terminal determines the RV value to apply to UL data transmitted with the same HARQ process number (HPN), based on predetermined rules, and transmits RV information indicating this RV value, together with the UL data.

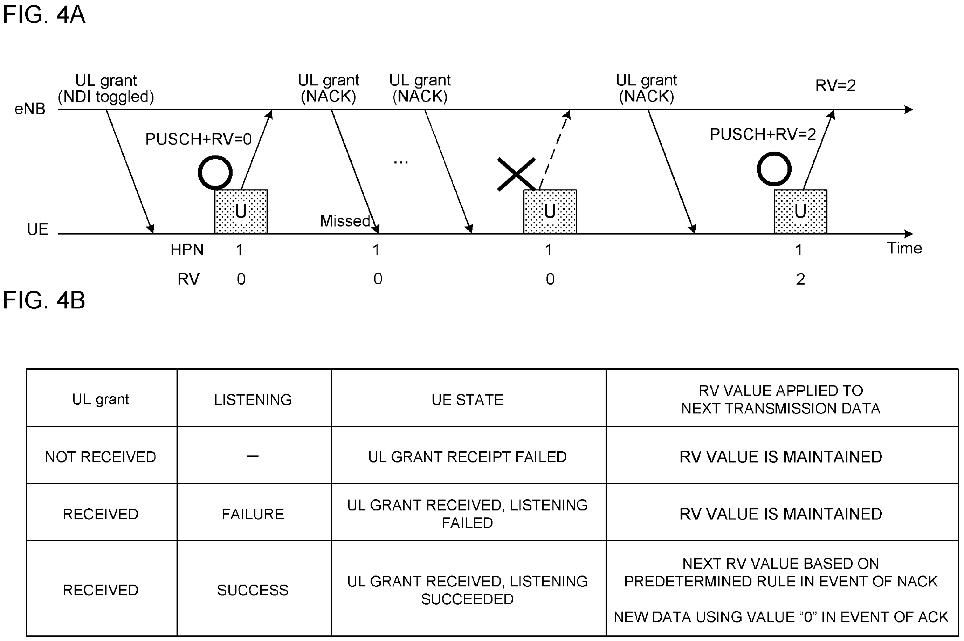

FIGs. 4 are diagrams to show an example of transmitting RV information according to the present embodiment. Note that, while FIGs. 4 show UL data of HPN=1 as an example, the example of transmission shown in FIGs. 4 can also be applied to other HPNs that are subject to multi-subframe scheduling based on the same DCI as that of HPN=1.

In addition, in FIG. 4A, a predetermined rule is set forth that the RV value to apply to UL data of the same HPN should be changed from "0"→"2"→"3"→"1," on a per transmission basis, but the predetermined rule is not limited to this. Furthermore, the predetermined rule may be stored in advance in the user terminal, or may be configured semi-statically by system information (for example, the MIB (Master Information Block), SIBs (System Information Blocks), etc.), or by higher layer signaling (for example, RRC (Radio Resource Control) signaling and so on).

In FIG. 4A, the user terminal receives a UL grant with HPN=1 from the radio base station. Since this UL grant includes a toggled NDI, the user terminal determines that "0" is the RV value to apply to new UL data in HPN=1. The user terminal executes listening in or immediately before the subframe scheduled by this UL grant. The user terminal succeeds in listening and transmits RV information indicating this RV value "0" with the new UL data.

In FIG. 4A, if the radio base station fails to receive (decode) the UL data to which the RV value "0" is applied, the radio base station transmits a UL grant including a NACK. When the user terminal cannot (fails to) receive (detect) this UL grant, the user terminal maintains the same RV value (here, "0") as that of the previously-transmitted UL data, as shown in FIG. 4B.

Referring to FIG. 4A, the radio base station cannot receive retransmission data from the user terminal, and so the radio base station continues transmitting a UL grant including a NACK. When the user terminal receives the UL grant successfully but fails listening, as shown in FIG. 4B, the user terminal maintains the same RV value ("0" here) as that of the previously transmitted UL data.

After that, when the user terminal successfully receives the UL grant including a NACK from the radio base station and succeeds in listening, the user terminal applies the next RV value "2," which follows the RV value "0," to the UL data (FIG. 4B), based on a predetermined rule, and transmits the UL data with RV information indicating the RV value "2" (FIG. 4A).

As a result of this, even if the user terminal cannot receive the UL grant or fails listening, the radio base station can identify the RV value applied to the UL data based on the RV information. Therefore, it is possible to prevent gaps in the understanding of RV values between the radio base station and the user terminal.

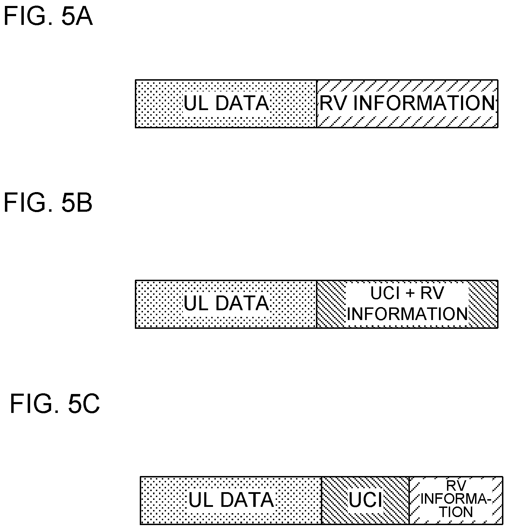

Now, with reference to FIGs. 5, in the present embodiment, the RV information that is transmitted with UL data will be described in detail. The RV information is information indicating the RV values applied to UL data, and may be, for example, a two-bit value indicating "0," "1," "2" and "3." FIGs. 5 are diagrams to show examples of encoding of RV information according to the present embodiment.

As shown in FIG. 5A, the user terminal may encode RV information and UL data separately (also referred to as "separate coding" etc.), and transmit the encoded RV information and UL data using the PUSCH of the same subframe. Note that different coding schemes may be used to between coding of UL data and coding of RV information. For example, UL data may be encoded using turbo code, and RV information may be encoded using convolutional code or block code.

Alternatively, as shown in FIG. 5B, the user terminal may encode RV information as part of uplink control information (UCI). Here, the UCI is at least one of downlink (DL) retransmission control information (ACK or NACK), channel state information (CSI), and a scheduling request (SR).

Referring to FIG. 5B, the user terminal may couple the RV information and the UCI and then encode these (which is also referred to as "joint-coding," etc.), and the user terminal may transmit the encoded UCI (including RV information) and UL data using the PUSCH of the same subframe. Note that the UCI including RV information may be encoded using, for example, convolutional code and/or block code.

Alternately, as shown in FIG. 5C, the user terminal may encode RV information and UCI separately (which is also referred to as "separate coding," etc.). The user terminal may encode UL data, UCI and RV information, separately, and transmit these using the PUSCH of the same subframe.

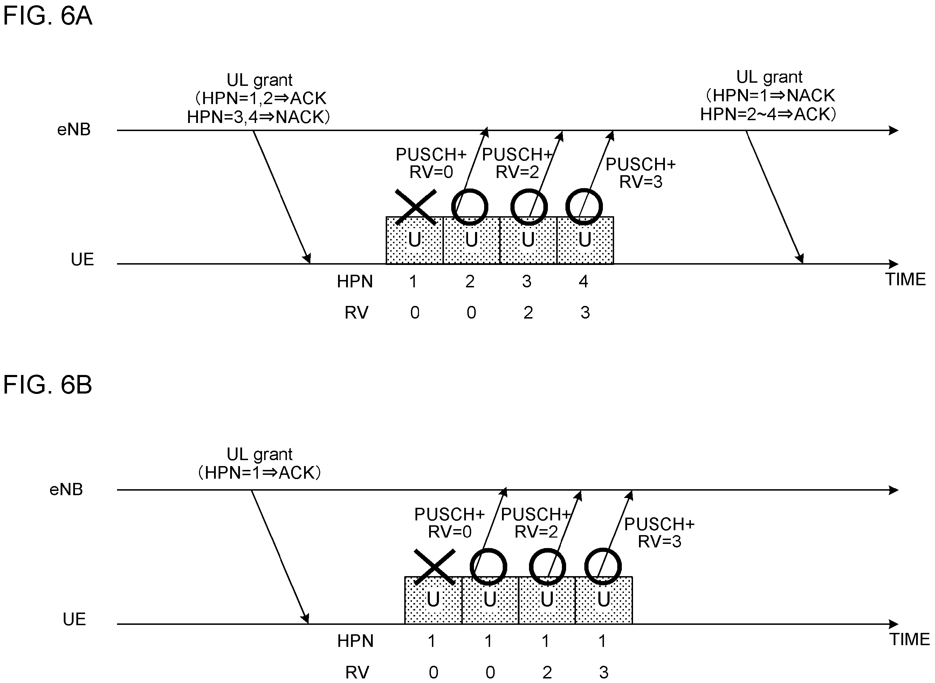

FIGs. 6 are diagrams to show examples of transmission of RV information when multi-subframe scheduling according to the present embodiment is employed. Note that, in the examples of FIGs. 6, UL data transmission in four subframes is scheduled by a single UL grant, but this is not limiting. Note that, although, in FIGs. 6, four subframes are consecutive, these subframes need not be consecutive.

FIG. 6A shows a case where UL data of varying HPNs are scheduled in each of the four subframes. For example, referring to FIG. 6A, although the user terminal fails listening in or immediately before the first subframe scheduled by the UL grant, the user terminal succeeds in listening in or immediately before the second subframe. Since the NDI is toggled in HPN=2 assigned to the subframe where listening succeeds, the RV value "0" is applied to new UL data, and the new UL data is transmitted with RV information that indicates the RV value "0."

Meanwhile, since, in HPN=3, the NDI is not toggled, the RV value "2," which is determined based on the previous RV value "0" with the same HPN is applied to the UL data that is retransmitted, and the retransmitted UL data is transmitted with RV information indicating this RV value "2." Similarly, since the NDI is not toggled in HPN=4, the RV value "3," which is determined based on the previous RV value "2" with the same HPN is applied to the UL data that is retransmitted, and the retransmitted UL data is transmitted with this RV information indicating the RV value "3." Note that, in FIG. 6A, as for the UL data of HPN=1 where listening fails, retransmission is commanded by a NACK that is included in a subsequent UL grant.

FIG. 6B shows a case where UL data of the same HPN (here, HPN=1) is scheduled in four subframes. As shown in FIG. 6B, when the user terminal successfully conducts listening in or shortly before the second subframe, the user terminal applies the RV value "0" to the new UL data, and transmits the new UL data with RV information indicating the RV value "0."

In FIG. 6B, in subsequent subframes, the user terminal may apply different RV values "2" and "3" to the same UL data as that of the second subframe, based on a predetermined rule, and transmit this UL data with RV information. For example, referring to FIG. 6B, the RV values "0," "2," and "1" are respectively applied to the UL data of the same HPN=1, transmitted in three subframes where listening has been successful, based on a predetermined rule. Note that the predetermined rule applied to RV values is not limited to that shown in FIG. 6B. Alternately, although not illustrated, UL data may not be transmitted in subsequent subframes.

According to the first aspect of the present invention, the user terminal determines the RV value to apply to UL data transmitted with the same HPN, based on predetermined rules, and transmits RV information indicating this RV value, together with the UL data. Accordingly, the radio base station can identify the RV value applied to the UL data based on this RV information, so that, even when the RV value that is applied to UL data of the same HPN is changed implicitly based on predetermined rules, it is possible to prevent gaps in the understanding of RV values between the radio base station and the user terminal.

### (Other Aspects)

Although a case has been described above in accordance with the first aspect where gaps in the understanding of RV values are prevented from forming between the radio base station and the user terminal when asynchronous HARQ is used, by transmitting RV information that indicates RV values, together with UL data, the method of preventing gaps in understanding is not limited to that described above with the first aspect.

For example, the radio base station may detect whether or not there is transmission from a scheduled user terminal (DTX (Discontinuous Transmission) detection). This is because, if the radio base station can accurately detect whether or not a scheduled user terminal performs transmission, the situation can be prevented where scheduled UL data is not transmitted due to a failure of listening but the radio base station nevertheless misunderstands that the UL data has been transmitted, so that the understanding of RV values matches.

Alternatively, the user terminal may transmit listening results in an unlicensed carrier to the radio base station via a licensed carrier. For example, the user terminal may transmit listening results to the radio base station by using licensed carrier's physical channel (for example, PUCCH (Physical Uplink Control Channel), PRACH (Physical Random Access Channel), PUSCH, etc.). Alternatively, the user terminal may transmit listening results to the radio base station by using higher layer signaling (for example, MAC CE (Medium Access Control Control Element), MR (Measurement Report), etc.) of a licensed carrier.

### (Radio Communication System)

Now, the structure of a radio communication system according to the present embodiment will be described below. In this radio communication system, the radio communication methods according to each of the above-described examples are employed. Note that the radio communication methods according to each example may be used alone or in combination.

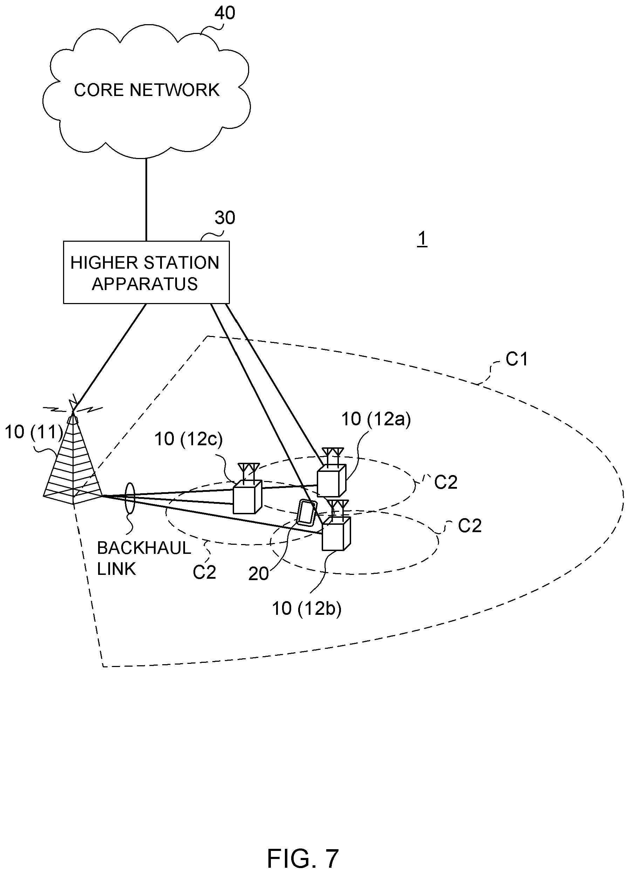

FIG. 7 is a diagram to show an example of a schematic structure of a radio communication system according to present embodiment. A radio communication system 1 can adopt carrier aggregation (CA) and/or dual connectivity (DC) to group a plurality of fundamental frequency blocks (component carriers) into one, where the LTE system bandwidth constitutes 1 unit. Also, the radio communication system 1 has a radio base station (for example, an LTE-U base station) that is capable of using unlicensed bands.

Note that the radio communication system 1 may be referred to as "SUPER 3G," "LTE-A (LTE-Advanced)," "IMT-Advanced," "4G (4th generation mobile communication system)," "5G (5th generation mobile communication system)," "FRA (Future Radio Access)," "NR (New RAT)," and so on.

The radio communication system 1 shown in FIG. 7 includes a radio base station 11 that forms a macro cell C1, and radio base stations 12 (12a to 12c) that form small cells C2, which are placed within the macro cell C1 and which are narrower than the macro cell C1. Also, user terminals 20 are placed in the macro cell C1 and in each small cell C2. For example, a mode may be possible in which the macro cell C1 is used in a licensed band and the small cells C2 are used in unlicensed bands (LTE-U). Also, a mode may be also possible in which part of the small cells is used in a licensed band and the rest of the small cells are used in unlicensed bands.

The user terminals 20 can connect with both the radio base station 11 and the radio base stations 12. The user terminals 20 may use the macro cell C1 and the small cells C2, which use different frequencies, at the same time, by means of CA or DC. For example, it is possible to transmit assist information (for example, the DL signal configuration) related to a radio base station 12 (which is, for example, an LTE-U base station) that uses an unlicensed band, from the radio base station 11 that uses a licensed band to the user terminals 20. Furthermore, a structure may be employed here in which, when CA is applied between a licensed band and an unlicensed band, 1 radio base station (for example, the radio base station 11) controls the scheduling of licensed band cells and unlicensed band cells.

Note that it is equally possible to adopt a structure in which a user terminal 20 connects with the radio base stations 12, without connecting with the radio base station 11. For example, it is possible to adopt a structure in which a radio base station 12 that uses an unlicensed band establishes a stand-alone connection with a user terminal 20. In this case, the radio base station 12 controls the scheduling of unlicensed band cells.

Between the user terminals 20 and the radio base station 11, communication can be carried out using a carrier of a relatively low frequency band (for example, 2 GHz) and a narrow bandwidth (referred to as, for example, an "existing carrier," a "legacy carrier" and so on). Meanwhile, between the user terminals 20 and the radio base stations 12, a carrier of a relatively high frequency band (for example, 3.5 GHz, 5 GHz and so on) and a wide bandwidth may be used, or the same carrier as that used in the radio base station 11 may be used. Note that the structure of the frequency band for use in each radio base station is by no means limited to these.

A structure may be employed here in which wire connection (for example, means in compliance with the CPRI (Common Public Radio Interface) such as optical fiber, the X2 interface and so on) or wireless connection is established between the radio base station 11 and the radio base station 12 (or between two radio base stations 12).

The radio base station 11 and the radio base stations 12 are each connected with higher station apparatus 30, and are connected with a core network 40 via the higher station apparatus 30. Note that the higher station apparatus 30 may be, for example, access gateway apparatus, a radio network controller (RNC), a mobility management entity (MME) and so on, but is by no means limited to these. Also, each radio base station 12 may be connected with the higher station apparatus 30 via the radio base station 11.

Note that the radio base station 11 is a radio base station having a relatively wide coverage, and may be referred to as a "macro base station," a "central node," an "eNB" (eNodeB), a "transmitting/receiving point" and so on. Also, the radio base stations 12 are radio base stations having local coverages, and may be referred to as "small base stations," "micro base stations," "pico base stations," "femto base stations," "HeNBs (Home eNodeBs)," "RRHs (Remote Radio Heads)," "transmitting/receiving points" and so on. Hereinafter the radio base stations 11 and 12 will be collectively referred to as "radio base stations 10," unless specified otherwise. Also, it is preferable to configure radio base stations 10 that use the same unlicensed band on a shared basis to be synchronized in time.

The user terminals 20 are terminals that support various communication schemes such as LTE, LTE-A and so on, and may be either mobile communication terminals or stationary communication terminals.

In the radio communication system 1, as radio access schemes, OFDMA (Orthogonal Frequency Division Multiple Access) is applied to the downlink and SC-FDMA (Single-Carrier Frequency Division Multiple Access) is applied to the uplink. OFDMA is a multi-carrier communication scheme to perform communication by dividing a frequency bandwidth into a plurality of narrow frequency bandwidths (subcarriers) and mapping data to each subcarrier. SC-FDMA is a single-carrier communication scheme to mitigate interference between terminals by dividing the system bandwidth into bands formed with one or continuous resource blocks per terminal, and allowing a plurality of terminals to use mutually different bands. Note that the uplink and downlink radio access schemes are by no means limited to the combination of these.

In the radio communication system 1, a downlink shared channel (PDSCH (Physical Downlink Shared CHannel)), which is used by each user terminal 20 on a shared basis, a broadcast channel (PBCH (Physical Broadcast CHannel)), downlink L1/L2 control channels and so on are used as downlink channels. The PDSCH may be referred to as a "downlink data channel." User data, higher layer control information and SIBs (System Information Blocks) are communicated in the PDSCH. Also, the MIB (Master Information Block) is communicated in the PBCH.

The downlink L1/L2 control channels include a PDCCH (Physical Downlink Control CHannel), an EPDCCH (Enhanced Physical Downlink Control CHannel), a PCFICH (Physical Control Format Indicator CHannel), a PHICH (Physical Hybrid-ARQ Indicator CHannel) and so on. Downlink control information (DCI), including PDSCH and PUSCH scheduling information, is communicated by the PDCCH. A CFI (Control Format Indicator), which indicates the number of OFDM symbols to use for the PDCCH, is communicated by the PCFICH. HARQ retransmission control information (ACK/NACK) in response to the PUSCH is communicated using at least one of the PHICH, the PDCCH and the EPDCCH. The EPDCCH is frequency-division-multiplexed with the PDSCH and used to communicate DCI and so on, like the PDCCH.

In the radio communication system 1, an uplink shared channel (PUSCH (Physical Uplink Shared CHannel)), which is used by each user terminal 20 on a shared basis, an uplink control channel (PUCCH (Physical Uplink Control CHannel)), a random access channel (PRACH (Physical Random Access CHannel)) and so on are used as uplink channels. The PUSCH may be referred to as an "uplink data channel." User data and higher layer control information are communicated by the PUSCH. Also, downlink radio quality information (CQI (Channel Quality Indicator)), delivery acknowledgment information (ACK/NACK) and so on are communicated by the PUCCH. By means of the PRACH, random access preambles for establishing connections with cells are communicated.

In the radio communication system 1, cell-specific reference signals (CRSs), channel state information reference signals (CSI-RSs), demodulation reference signals (DMRSs), discovery and/or measurement reference signals (DRSs) and so on are communicated as DL reference signals. Also, in the radio communication system 1, measurement reference signals (SRSs (Sounding Reference Signals)), demodulation reference signals (DMRSs) and so on are communicated as UL reference signals. Note that the DMRS may be referred to as a "user terminal-specific reference signal (UE-specific Reference Signal)." Also, the reference signals to be communicated are by no means limited to these.

### (Radio Base Station)

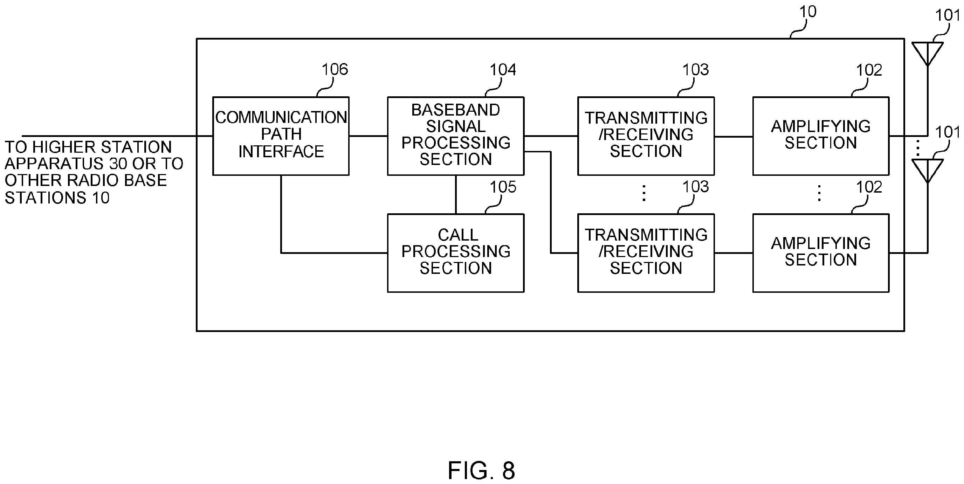

FIG. 8 is a diagram to show an example of an overall structure of a radio base station according to present embodiment. A radio base station 10 has a plurality of transmitting/receiving antennas 101, amplifying sections 102, transmitting/receiving sections 103, a baseband signal processing section 104, a call processing section 105 and a communication path interface 106. Note that one or more transmitting/receiving antennas 101, amplifying sections 102 and transmitting/receiving sections 103 may be provided.

User data to be transmitted from the radio base station 10 to a user terminal 20 on the downlink (DL) is input from the higher station apparatus 30 to the baseband signal processing section 104, via the communication path interface 106.

In the baseband signal processing section 104, the user data is subjected to transmission processes, including a PDCP (Packet Data Convergence Protocol) layer process, division and coupling of the user data, RLC (Radio Link Control) layer transmission processes such as RLC retransmission control, MAC (Medium Access Control) retransmission control (for example, an HARQ (Hybrid Automatic Repeat reQuest) transmission process), scheduling, transport format selection, channel coding, an inverse fast Fourier transform (IFFT) process and a precoding process, and the result is forwarded to each transmitting/receiving sections 103. Furthermore, DL control signals are also subjected to transmission processes such as channel coding and an inverse fast Fourier transform, and forwarded to each transmitting/receiving section 103.

Baseband signals that are precoded and output from the baseband signal processing section 104 on a per antenna basis are converted into a radio frequency band in the transmitting/receiving sections 103, and then transmitted. The radio frequency signals having been subjected to frequency conversion in the transmitting/receiving sections 103 are amplified in the amplifying sections 102, and transmitted from the transmitting/receiving antennas 101.

The transmitting/receiving sections 103 can transmit and receive UL and/or DL (hereinafter "UL/DL") signals in unlicensed bands. Note that the transmitting/receiving sections 103 may be capable of transmitting/receiving UL/DL signals in licensed bands as well. The transmitting/receiving sections 103 can be constituted by transmitters/receivers, transmitting/receiving circuits or transmitting/receiving apparatus that can be described based on general understanding of the technical field to which the present invention pertains. Note that a transmitting/receiving section 103 may be structured as a transmitting/receiving section in one entity, or may be constituted by a transmitting section and a receiving section.

Meanwhile, as for UL signals, radio frequency signals that are received in the transmitting/receiving antennas 101 are each amplified in the amplifying sections 102. The transmitting/receiving sections 103 receive the UL signals amplified in the amplifying sections 102. The received signals are converted into the baseband signal through frequency conversion in the transmitting/receiving sections 103 and output to the baseband signal processing section 104.

In the baseband signal processing section 104, user data that is included in the UL signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing (such as setting up and releasing communication channels), manages the state of the radio base stations 10 and manages the radio resources.

The communication path interface section 106 transmits and receives signals to and from the higher station apparatus 30 via a predetermined interface. Also, the communication path interface 106 may transmit and receive signals (backhaul signaling) with other radio base stations 10 via an inter-base station interface (which is, for example, optical fiber that is in compliance with the CPRI (Common Public Radio Interface), the X2 interface, etc.).

Note that the transmitting/receiving sections 103 transmit DL signals to the user terminal 20 by using at least an unlicensed band. For example, the transmitting/receiving sections 103 transmit DCI (UL grant) that allocates the PUSCH (UL data) to the user terminal 20, and transmit DCI (DL assignment) that allocates the PDSCH to the user terminal 20. Furthermore, the transmitting/receiving sections 103 may transmit control information related to UL data retransmission.

Also, the transmitting/receiving sections 103 receive UL signals from the user terminal 20 by using at least an unlicensed band. For example, the transmitting/receiving sections 103 receive UL data and/or UCI from the user terminal 20 via the PUSCH allocated by the above DCI (UL grant). Furthermore, the transmitting/receiving sections 103 receive UL data, with RV information that indicates RV values applied to the UL data.

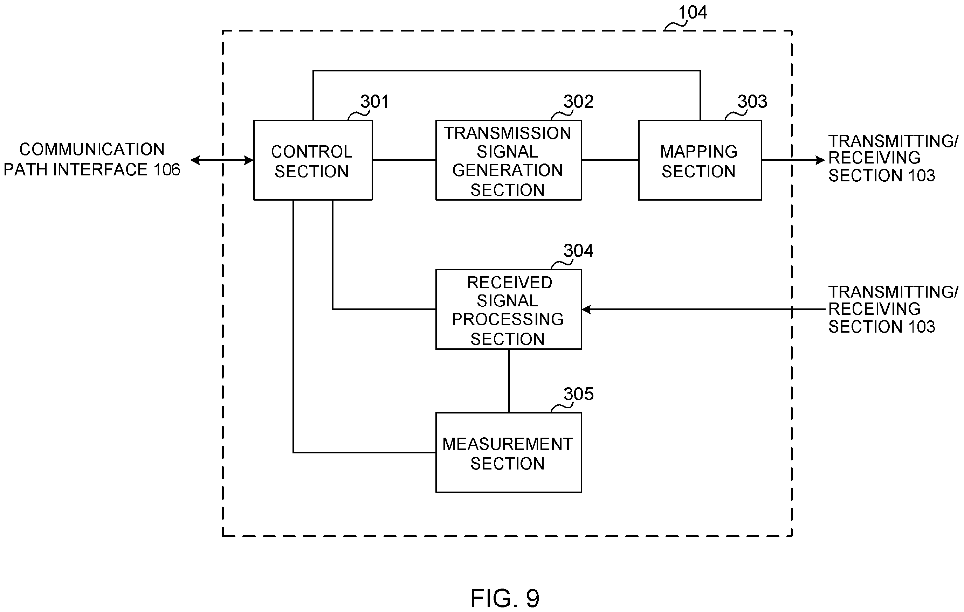

FIG. 9 is a diagram to show an example of a functional structure of a radio base station according to present embodiment. Note that, although FIG. 9 primarily shows functional blocks that pertain to characteristic parts of the present embodiment, the radio base station 10 has other functional blocks that are necessary for radio communication as well. As shown in FIG. 9, the baseband signal processing section 104 has a control section (scheduler) 301, a transmission signal generating section (generating section) 302, a mapping section 303, a received signal processing section 304 and a measurement section 305.

The control section (scheduler) 301 controls the whole of the radio base station 10. Note that, when a licensed band and an unlicensed band are scheduled with one control section (scheduler) 301, the control section 301 controls communication in licensed band cells and unlicensed band cells. For the control section 301, a controller, a control circuit or control apparatus that can be described based on common understanding of the technical field to which the present invention pertains can be used.

The control section 301, for example, controls the generation of DL signals in the transmission signal generation section 302, the allocation of DL signals by the mapping section 303, and so on. Furthermore, the control section 301 controls the signal receiving processes in the received signal processing section 304, the measurements of signals in the measurement section 305, and so on.

The control section 301 controls scheduling, generation, mapping, transmission and so on of DL signals (system information, DCI, DL data, DL reference signals, synchronization signals, etc.). Furthermore, the control section 301 controls LBT (listening) by the measurement section 305, and controls the transmission signal generation section 302 and the mapping section 303 to transmit DL signals depending on the result of LBT.

Furthermore, the control section 301 controls scheduling, receipt and so on of UL signals (UL data, UCI, PRACH, UL reference signals, etc.). To be more specific, the control section 301 may schedule UL data transmission in a single subframe (single-subframe scheduling), or schedule UL data transmission in multiple subframes (multi-subframe scheduling).

Furthermore, the control section 301 may control the transmission signal generation section 302 to generate DCI (for example, UL grant), including retransmission control information (for example, ACK or NACK), based on the result of the UL data receiving process in the received signal processing section 304. In addition, the control section 301 may control the transmission signal generation section 302 to generate a PHICH including this retransmission control information.

Furthermore, the control section 301 controls the received signal processing section 304 to control the receiving process of RV information received with UL data, and to perform the UL data receiving process based on the RV values indicated by the RV information.

The transmission signal generation section 302 generates DL signals (for example, DCI, DL data signals, DL reference signals, etc.) based on commands from the control section 301, and outputs these signals to the mapping section 303. The transmission signal generation section 302 can be constituted by a signal generator, a signal generating circuit or signal generating apparatus that can be described based on general understanding of the technical field to which the present invention pertains.

The mapping section 303 maps the DL signals generated in the transmission signal generation section 302 to predetermined radio resources based on commands from the control section 301, and outputs these to the transmitting/receiving sections 103. The mapping section 303 can be constituted by a mapper, a mapping circuit or mapping apparatus that can be described based on general understanding of the technical field to which the present invention pertains.

The received signal processing section 304 performs receiving processes (for example, demapping, demodulation, decoding and so on) of received signals that are input from the transmitting/receiving sections 103. Here, the received signals are, for example, UL signals (including UL data, RV information, etc.) transmitted from the user terminal 20. For the received signal processing section 304, a signal processor, a signal processing circuit or signal processing apparatus that can be described based on general understanding of the technical field to which the present invention pertains can be used.

The received signal processing section 304 outputs the decoded information acquired through the receiving processes to the control section 301. For example, received signal processing is performed on the UL data and RV information, and the result of the received signal processing is output to the control section 301. Also, the received signal processing section 304 outputs the received signals, the signals after the receiving processes and so on, to the measurement section 305.

The measurement section 305 conducts measurements with respect to the received signals. The measurement section 305 can be constituted by a measurer, a measurement circuit or measurement apparatus that can be described based on general understanding of the technical field to which the present invention pertains. The measurement section 305 executes LBT in a carrier where LBT is configured (for example, in an unlicensed band) based on a command from the control section 301, and outputs the result of LBT (for example, judgment as to whether the channel state is idle or busy) to the control section 301.

### (User Terminal)

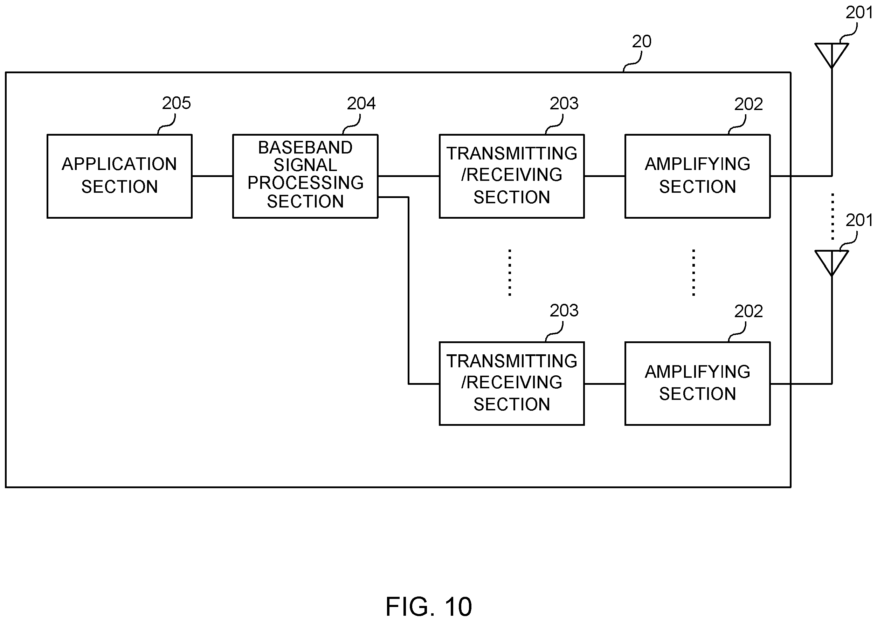

FIG. 10 is a diagram to show an example of an overall structure of a user terminal according to the present embodiment. A user terminal 20 has a plurality of transmitting/receiving antennas 201, amplifying sections 202, transmitting/receiving sections 203, a baseband signal processing section 204 and an application section 205. Note that one or more transmitting/receiving antennas 201, amplifying sections 202 and transmitting/receiving sections 203 may be provided.

Radio frequency signals that are received in the transmitting/receiving antennas 201 are amplified in the amplifying sections 202. The transmitting/receiving sections 203 receive the DL signals amplified in the amplifying sections 202. The received signals are subjected to frequency conversion and converted into the baseband signal in the transmitting/receiving sections 203, and output to the baseband signal processing section 204. The transmitting/receiving sections 203 are capable of transmitting/receiving UL/DL signals in unlicensed bands. Note that the transmitting/receiving sections 203 may be capable of transmitting/receiving UL/DL signals in licensed bands as well.

A transmitting/receiving section 203 can be constituted by a transmitters/receiver, a transmitting/receiving circuit or transmitting/receiving apparatus that can be described based on general understanding of the technical field to which the present invention pertains. Note that a transmitting/receiving section 203 may be structured as a transmitting/receiving section in one entity, or may be constituted by a transmitting section and a receiving section.

In the baseband signal processing section 204, the baseband signal that is input is subjected to an FFT process, error correction decoding, a retransmission control receiving process, and so on. Downlink user data is forwarded to the application section 205. The application section 205 performs processes related to higher layers above the physical layer and the MAC layer, and so on. Furthermore, in the downlink data, broadcast information is also forwarded to the application section 205.

Meanwhile, uplink (UL) user data is input from the application section 205 to the baseband signal processing section 204. The baseband signal processing section 204 performs a retransmission control transmission process (for example, an HARQ transmission process), channel coding, precoding, a discrete Fourier transform (DFT) process, an IFFT process and so on, and the result is forwarded to the transmitting/receiving section 203. Baseband signals that are output from the baseband signal processing section 204 are converted into a radio frequency band in the transmitting/receiving sections 203 and transmitted. The radio frequency signals that are subjected to frequency conversion in the transmitting/receiving sections 203 are amplified in the amplifying sections 202, and transmitted from the transmitting/receiving antennas 201.

Note that the transmitting/receiving sections 203 receive DL signals for the user terminal 20 by using at least an unlicensed band. For example, the transmitting/receiving sections 203 receive DCI (UL grant) that allocates the PUSCH (UL data) to the user terminal 20, and receive DCI (DL assignment) that allocates the PDSCH to the user terminal 20. In addition, the transmitting/receiving sections 203 may receive control information related to UL data retransmission.

Also, the transmitting/receiving sections 203 transmit UL signals from the user terminal 20 by using at least an unlicensed band. For example, the transmitting/receiving sections 203 transmit UL data and/or UCI from the user terminal 20 via the PUSCH allocated by the above DCI (UL grant). In addition, the transmitting/receiving sections 203 transmit UL data, with RV information that indicates RV values applied to the UL data.

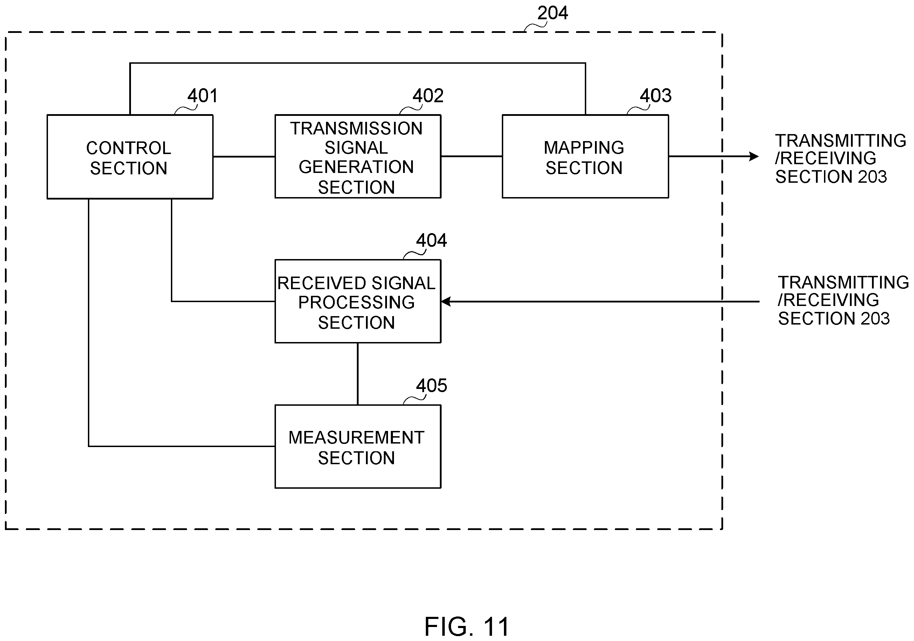

FIG. 11 is a diagram to show an example of a functional structure of a user terminal according to present embodiment. Note that, although FIG. 11 primarily shows functional blocks that pertain to characteristic parts of the present embodiment, the user terminal 20 has other functional blocks that are necessary for radio communication as well. As shown in FIG. 11, the baseband signal processing section 204 provided in the user terminal 20 at least has a control section 401, a transmission signal generating section 402, a mapping section 403, a received signal processing section 404 and a measurement section 405.

The control section 401 controls the whole of the user terminal 20. For the control section 401, a controller, a control circuit or control apparatus that can be described based on general understanding of the technical field to which the present invention pertains can be used.

The control section 401, for example, controls the generation of UL signals in the transmission signal generation section 402, the allocation of UL signals by the mapping section 403, and so on. Furthermore, the control section 401 controls the DL signal receiving processes in the received signal processing section 404, the measurements of signals in the measurement section 405, and so on.

The control section 401 acquires DL signals (PDCCH/EPDCCH, PDSCH, DL reference signals, synchronization signals, etc.) transmitted from the radio base station 10, from the received signal processing section 404. The control section 401 controls the generation of UL signals (for example, PUCCH, PUSCH, etc.) based on the DCI that is included in the PDCCH/EPDCCH (DL control signals), the decoding result of the PDSCH (DL data signal) and so on.

Furthermore, the control section 401 may control the transmission signal generation section 402 and the mapping section 403 to transmit UL signals based on LBT results acquired in the measurement section 405. To be more specific, when LBT (listening) fails, the control section 401 stops transmitting UL data and maintains the RV value applied to the previous UL data of the same HPN.

Furthermore, the control section 401 controls transmission of UL data based on retransmission control information (ACK or NACK) from the radio base station 10. To be more specific, when LBT is successful, the control section 401 controls the transmission signal processing 402, the mapping section 403, and the transmitting/receiving sections 203 to retransmit UL data of the same HPN in response to a NACK from the radio base station 10, and to transmit new UL data in response to an ACK from the radio base station 10.

Furthermore, the control section 401 determines the redundancy version (RV) values to apply to UL data that is transmitted with the same HPN based on a predetermined rule (for example, "0"→"2"→"3"→"1") (see FIGs. 4A and 4B). To be more specific, if retransmission takes place, the control section 401 may determine the RV value to apply to the next UL data based on the RV value applied to the previous UL data of the same HPN. On the other hand, when the initial transmission takes place, the control section 401 may determine the RV value to be "0."

Also, if receipt (detection) of a UL grant fails, or if listening fails, the control section 401 may maintain the RV value applied to the previous UL data of the same HPN (FIG. 4B). Furthermore, the control section 401 may control the transmission signal processing section 402, the mapping section 403 and transmitting/receiving sections 203 so as to transmit RV information, indicating the determined RV values, with UL data (FIG. 4A).

Furthermore, the control section 401 may control the transmission signal processing section 402 so as to encode UL data and RV information separately (FIG. 5A). Furthermore, the control section 401 may control the transmission signal processing section 402 to encode RV information as part of uplink control information (UCI) (FIG. 5B). Alternatively, the control section 401 may control the transmission signal processing section 402 to encode RV information separately from uplink control information (UCI) (FIG. 5C).

Also, when multiple subframes are scheduled by a single downlink control information (DCI), the control section 401 controls the transmission signal processing 402, the mapping section 403 and the transmitting/receiving sections 203 so as to transmit RV information together with UL data. In these multiple subframes, UL data of different HPNs may be scheduled (FIG. 6A), or UL data of the same HPN may be scheduled (FIG. 6B). When UL data of the same HPN is scheduled, varying RV values may be applied between the multiple subframes.

Note that, when multiple subframes are scheduled by a single downlink control information (DCI), the HPN of each of the plurality of subframes may be specified by DCI, or derived by the control section 401 based on information provided in DCI.

he control section 401 controls the received signal processing section 404 and the measurement section 405 to carry out RRM measurements and/or CSI measurements using measurement reference signals in an unlicensed band. Note that RRM measurement may be performed by using the DRS. Furthermore, the measurement reference signal may be either the CRS, the CSI-RS, the CSI or the CSI-RS included in the DRS, etc.

The transmission signal generation section 402 generates UL signals (UL data signals, UCI, UL reference signals and so on) based on commands from the control section 401, and outputs these signals to the mapping section 403. The transmission signal generation section 402 can be constituted by a signal generator, a signal generating circuit or signal generating apparatus that can be described based on general understanding of the technical field to which the present invention pertains. For example, when DCI (UL grant) addressed to the user terminal 20 is included in DL control signals from the radio base station 10, the transmission signal generation section 402 is commanded by the control section 401 to generate a PUSCH.

The mapping section 403 maps the UL signals generated in the transmission signal generation section 402 to radio resources based on commands from the control section 401, and output the result to the transmitting/receiving sections 203. The mapping section 403 can be constituted by a mapper, a mapping circuit or mapping apparatus that can be described based on general understanding of the technical field to which the present invention pertains.

The received signal processing section 404 performs receiving processes (for example, demapping, demodulation, decoding and so on) of received signals that are input from the transmitting/receiving sections 203. Here, the received signals are, for example, DL signals transmitted from the radio base station 10. The received signal processing section 404 can be constituted by a signal processor, a signal processing circuit or signal processing apparatus that can be described based on general understanding of the technical field to which the present invention pertains. Also, the received signal processing section 404 can constitute the receiving section according to the present invention.

The received signal processing section 404 outputs the decoded information, acquired through the receiving processes, to the control section 401. The received signal processing section 404 outputs, for example, broadcast information, system information, RRC signaling, DCI and so on, to the control section 401. Also, the received signal processing section 404 outputs the received signals, the signals after the receiving processes and so on, to the measurement section 405.

The measurement section 405 conducts measurements with respect to the received signals. The measurement section 405 can be constituted by a measurer, a measurement circuit or measurement apparatus that can be described based on general understanding of the technical field to which the present invention pertains.

The measurement section 405 may execute LBT in a carrier where LBT is configured (for example, in an unlicensed band) based on commands from the control section 401. The measurement section 405 may output the results of LBT (for example, judgments as to whether the channel state is idle or busy) to the control section 401.

Also, the measurement section 405 measures RRM and CSI according to commands from the control section 401. For example, the measurement section 405 measures CSI using measurement reference signals (the CRS, the CSI-RS, the CRS included in the DRS or the CSI-RS for CSI measurements arranged in DRS-transmitting subframes). The measurement result is output to the control section 401 and transmitted from the transmitting/receiving section 203 using the PUSCH or the PUCCH.

### (Hardware Structure)

Note that the block diagrams that have been used to describe the above embodiments show blocks in functional units. These functional blocks (components) may be implemented in arbitrary combinations of hardware and/or software. Also, the means for implementing each functional block is not particularly limited. That is, each functional block may be realized by one piece of apparatus that is physically and/or logically aggregated, or may be realized by directly and/or indirectly connecting two or more physically and/or logically separate pieces of apparatus (via wire or wireless, for example) and using these multiple pieces of apparatus.

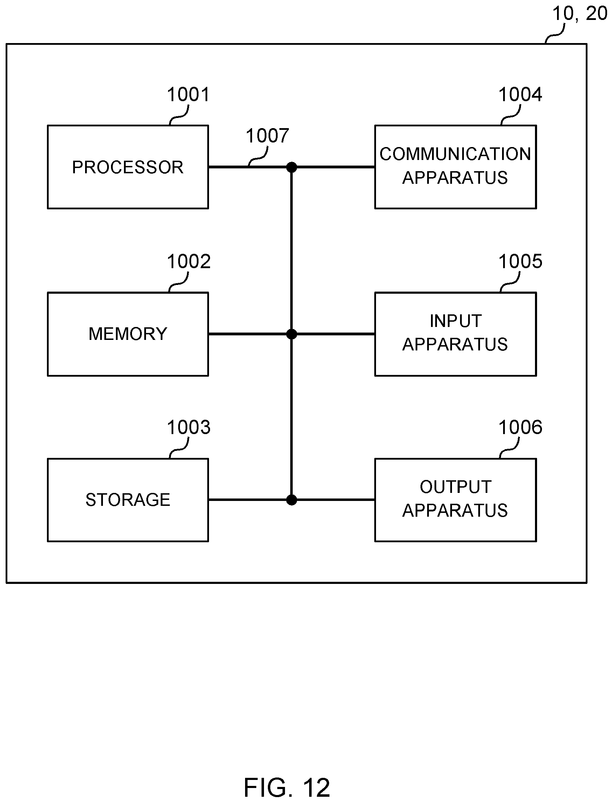

That is, a radio base station, a user terminal and so on according to an embodiment of the present invention may function as a computer that executes the processes of the radio communication method of the present invention. FIG. 12 is a diagram to show an example hardware structure of a radio base station and a user terminal according to present embodiment. Physically, the above-described radio base stations 10 and user terminals 20 may be formed as a computer apparatus that includes a processor 1001, a memory 1002, a storage 1003, communication apparatus 1004, input apparatus 1005, output apparatus 1006 and a bus 1007.

Note that, in the following description, the word "apparatus" may be replaced by "circuit," "device," "unit" and so on. Note that the hardware structure of a radio base station 10 and a user terminal 20 may be designed to include one or more of each apparatus shown in the drawings, or may be designed not to include part of the apparatus.

For example, although only one processor 1001 is shown, a plurality of processors may be provided. Furthermore, processes may be implemented with one processor, or processes may be implemented in sequence, or in different manners, on two or more processors. Note that the processor 1001 may be implemented with one or more chips.

Each function of the radio base station 10 and the user terminal 20 is implemented by allowing predetermined software (programs) to be read on hardware such as the processor 1001 and the memory 1002, and by allowing the processor 1001 to do calculations, the communication apparatus 1004 to communicate, and the memory 1002 and the storage 1003 to read and/or write data.

The processor 1001 may control the whole computer by, for example, running an operating system. The processor 1001 may be configured with a central processing unit (CPU), which includes interfaces with peripheral apparatus, control apparatus, computing apparatus, a register and so on. For example, the above-described baseband signal processing section 104 (204), call processing section 105 and so on may be implemented by the processor 1001.

Furthermore, the processor 1001 reads programs (program codes), software modules or data, from the storage 1003 and/or the communication apparatus 1004, into the memory 1002, and executes various processes according to these. As for the programs, programs to allow computers to execute at least part of the operations of the above-described embodiments may be used. For example, the control section 401 of the user terminals 20 may be implemented by control programs that are stored in the memory 1002 and that operate on the processor 1001, and other functional blocks may be implemented likewise.

The memory 1002 is a computer-readable recording medium, and may be constituted by, for example, at least one of a ROM (Read Only Memory), an EPROM (Erasable Programmable ROM), an EEPROM (Electrically EPROM), a RAM (Random Access Memory) and/or other appropriate storage media. The memory 1002 may be referred to as a "register," a "cache," a "main memory" (primary storage apparatus) and so on. The memory 1002 can store executable programs (program codes), software modules and/and so on for implementing the radio communication methods according to embodiments of the present invention.

The storage 1003 is a computer-readable recording medium, and may be constituted by, for example, at least one of a flexible disk, a floppy (registered trademark) disk, a magneto-optical disk (for example, a compact disc (CD-ROM (Compact Disc ROM) and so on), a digital versatile disc, a Blu-ray (registered trademark) disk), a removable disk, a hard disk drive, a smart card, a flash memory device (for example, a card, a stick, a key drive, etc.), a magnetic stripe, a database, a server, and/or other appropriate storage media. The storage 1003 may be referred to as "secondary storage apparatus."

The communication apparatus 1004 is hardware (transmitting/receiving device) for allowing inter-computer communication by using wired and/or wireless networks, and may be referred to as, for example, a "network device," a "network controller," a "network card," a "communication module" and so on. The communication apparatus 1004 may be configured to include a high frequency switch, a duplexer, a filter, a frequency synthesizer and so on in order to realize, for example, frequency division duplex (FDD) and/or time division duplex (TDD). For example, the above-described transmitting/receiving antennas 101 (201), amplifying sections 102 (202), transmitting/receiving sections 103 (203), communication path interface 106 and so on may be implemented by the communication apparatus 1004.

The input apparatus 1005 is an input device for receiving input from the outside (for example, a keyboard, a mouse, a microphone, a switch, a button, a sensor and so on). The output apparatus 1006 is an output device for allowing sending output to the outside (for example, a display, a speaker, an LED (Light Emitting Diode) lamp and so on). Note that the input apparatus 1005 and the output apparatus 1006 may be provided in an integrated structure (for example, a touch panel).

Furthermore, these types of apparatus, including the processor 1001, the memory 1002 and others, are connected by a bus 1007 for communicating information. The bus 1007 may be formed with a single bus, or may be formed with buses that vary between pieces of apparatus.

Also, the radio base station 10 and the user terminal 20 may be structured to include hardware such as a microprocessor, a digital signal processor (DSP), an ASIC (Application-Specific Integrated Circuit), a PLD (Programmable Logic Device), an FPGA (Field Programmable Gate Array) and so on, and part or all of the functional blocks may be implemented by the hardware. For example, the processor 1001 may be implemented with at least one of these pieces of hardware.

### (Variations)

Note that the terminology used in this specification and the terminology that is needed to understand this specification may be replaced by other terms that convey the same or similar meanings. For example, "channels" and/or "symbols" may be replaced by "signals (or "signaling")." Also, "signals" may be "messages." A reference signal may be abbreviated as an "RS," and may be referred to as a "pilot," a "pilot signal" and so on, depending on which standard applies. Furthermore, a "component carrier" (CC) may be referred to as a "cell," a "frequency carrier," a "carrier frequency" and so on.

Furthermore, a radio frame may be comprised of one or more periods (frames) in the time domain. Each of one or more periods (frames) constituting a radio frame may be referred to as a "subframe." Furthermore, a subframe may be comprised of one or more slots in the time domain. Furthermore, a slot may be comprised of one or more symbols in the time domain (OFDM (Orthogonal Frequency Division Multiplexing) symbols, SC-FDMA (Single Carrier Frequency Division Multiple Access) symbols, and so on).

A radio frame, a subframe, a slot and a symbol all represent the time unit in signal communication. A radio frames, a subframe, a slot and a symbol may be each called by other applicable names. For example, one subframe may be referred to as a "transmission time interval" (TTI), or a plurality of consecutive subframes may be referred to as a "TTI," or one slot may be referred to as a "TTI." That is, a subframe and a TTI may be a subframe (1 ms) in existing LTE, may be a shorter period than 1 ms (for example, one to thirteen symbols), or may be a longer period of time than 1 ms.

Here, a TTI refers to the minimum time unit of scheduling in radio communication, for example. For example, in LTE systems, a radio base station schedules the allocation of radio resources (such as the frequency bandwidth and transmission power that can be used by each user terminal) for each user terminal in TTI units. Note that the definition of TTIs is not limited to this. The TTI may be the transmission time unit of channel-encoded data packets (transport blocks), or may be the unit of processing in scheduling, link adaptation and so on.

A TTI having a time duration of 1 ms may be referred to as a "normal TTI" (TTI in LTE Rel. 8 to 12), a "long TTI," a "normal subframe," a "long subframe," and so on. A TTI that is shorter than a normal TTI may be referred to as a "shortened TTI," a "short TTI," a "shortened subframe," a "short subframe," and so on.

A resource block (RB) is the unit of resource allocation in the time domain and the frequency domain, and may include one or a plurality of consecutive subcarriers in the frequency domain. Also, an RB may include one or more symbols in the time domain, and may be one slot, one subframe or one TTI in length. One TTI and one subframe each may be comprised of one or more resource blocks. Note that an RB may be referred to as a "physical resource block" (PRB (Physical RB)), a "PRB pair," an "RB pair," and so on.

Furthermore, a resource block may be comprised of one or more resource elements (REs). For example, one RE may be a radio resource field of one subcarrier and one symbol.

Note that the above-described structures of radio frames, subframes, slots, symbols and so on are merely examples. For example, configurations such as the number of subframes included in a radio frame, the number of slots included in a subframe, the number of symbols and RBs included in a slot, the number of subcarriers included in an RB, the number of symbols in a TTI, the symbol duration and cyclic prefix (CP) length can be variously changed.

Also, the information and parameters described in this specification may be represented in absolute values or in relative values with respect to predetermined values, or may be represented in other information formats. For example, radio resources may be specified by predetermined indices. In addition, equations to use these parameters and so on may be used, apart from those explicitly disclosed in this specification.

The names used for parameters and so on in this specification are in no respect limiting. For example, since various channels (PUCCH (Physical Uplink Control Channel), PDCCH (Physical Downlink Control Channel) and so on) and information elements can be identified by any suitable names, the various names assigned to these individual channels and information elements are in no respect limiting.

The information, signals and/or others described in this specification may be represented by using a variety of different technologies. For example, data, instructions, commands, information, signals, bits, symbols and chips, all of which may be referenced throughout the herein-contained description, may be represented by voltages, currents, electromagnetic waves, magnetic fields or particles, optical fields or photons, or any combination of these.

Also, information, signals and so on can be output from higher layers to lower layers and/or from lower layers to higher layers. Information, signals and so on may be input and output via a plurality of network nodes.

The information, signals and so on that are input may be transmitted to other pieces of apparatus. The information, signals and so on to be input and/or output can be overwritten, updated or appended. The information, signals and so on that are output may be deleted. The information, signals and so on that are input may be transmitted to other pieces of apparatus.

Reporting of information is by no means limited to the examples/embodiments described in this specification, and other methods may be used as well. For example, reporting of information may be implemented by using physical layer signaling (for example, downlink control information (DCI), uplink control information (UCI), higher layer signaling (for example, RRC (Radio Resource Control) signaling, broadcast information (the master information block (MIB), system information blocks (SIBs) and so on), MAC (Medium Access Control) signaling and so on), and other signals and/or combinations of these.

Note that physical layer signaling may be referred to as "L1/L2 (Layer 1/Layer 2) control information" (L1/L2 control signals), "L1 control information" (LI control signal) and so on. Also, RRC signaling may be referred to as "RRC messages," and can be, for example, an RRC connection setup message, RRC connection reconfiguration message, and so on. Also, MAC signaling may be reported using, for example, MAC control elements (MAC CEs (Control Elements)).

Also, reporting of predetermined information (for example, reporting of information to the effect that "X holds") does not necessarily have to be sent explicitly, and can be sent implicitly (by, for example, not reporting this piece of information).

Decisions may be made in values represented by one bit (0 or 1), may be made in Boolean values that represent true or false, or may be made by comparing numerical values (for example, comparison against a predetermined value).

Software, whether referred to as "software," "firmware," "middleware," "microcode" or "hardware description language," or called by other names, should be interpreted broadly, to mean instructions, instruction sets, code, code segments, program codes, programs, subprograms, software modules, applications, software applications, software packages, routines, subroutines, objects, executable files, execution threads, procedures, functions and so on.

Also, software, commands, information and so on may be transmitted and received via communication media. For example, when software is transmitted from a website, a server or other remote sources by using wired technologies (coaxial cables, optical fiber cables, twisted-pair cables, digital subscriber lines (DSL) and so on) and/or wireless technologies (infrared radiation, microwaves and so on), these wired technologies and/or wireless technologies are also included in the definition of communication media.

The terms "system" and "network" as used herein are used interchangeably.

As used herein, the terms "base station (BS)," "radio base station," "eNB," "cell," "sector," "cell group," "carrier," and "component carrier" may be used interchangeably. A base station may be referred to as a "fixed station," "NodeB," "eNodeB (eNB)," "access point," "transmission point," "receiving point," "femto cell," "small cell" and so on.

A base station can accommodate one or more (for example, three) cells (also referred to as "sectors"). When a base station accommodates a plurality of cells, the entire coverage area of the base station can be partitioned into multiple smaller areas, and each smaller area can provide communication services through base station subsystems (for example, indoor small base stations (RRHs (Remote Radio Heads)). The term "cell" or "sector" refers to part or all of the coverage area of a base station and/or a base station subsystem that provides communication services within this coverage.

As used herein, the terms "mobile station (MS)" "user terminal," "user equipment (UE)" and "terminal" may be used interchangeably. A base station may be referred to as a "fixed station," "NodeB," "eNodeB (eNB)," "access point," "transmission point," "receiving point," "femto cell," "small cell" and so on.

A mobile station may be referred to, by a person skilled in the art, as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client" or some other suitable terms.

Furthermore, the radio base stations in this specification may be interpreted as user terminals. For example, each aspect/embodiment of the present invention may be applied to a configuration in which communication between a radio base station and a user terminal is replaced with communication among a plurality of user terminals (D2D (Device-to-Device)). In this case, user terminals 20 may have the functions of the radio base stations 10 described above. In addition, wording such as "uplink" and "downlink" may be interpreted as "side." For example, an uplink channel may be interpreted as a side channel.

Likewise, the user terminals in this specification may be interpreted as radio base stations. In this case, the radio base stations 10 may have the functions of the user terminals 20 described above.

Certain actions which have been described in this specification to be performed by base station may, in some cases, be performed by upper nodes. In a network comprised of one or more network nodes with base stations, it is clear that various operations that are performed to communicate with terminals can be performed by base stations, one or more network nodes (for example, MMEs (Mobility Management Entities), S-GW (Serving-Gateways), and so on may be possible, but these are not limiting) other than base stations, or combinations of these.

The examples/embodiments illustrated in this specification may be used individually or in combinations, which may be switched depending on the mode of implementation. The order of processes, sequences, flowcharts and so on that have been used to describe the examples/embodiments herein may be re-ordered as long as inconsistencies do not arise. For example, although various methods have been illustrated in this specification with various components of steps in exemplary orders, the specific orders that are illustrated herein are by no means limiting.

The examples/embodiments illustrated in this specification may be applied to LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), NR(New Radio), NX (New radio access), FX (Future generation radio access), GSM (registered trademark) (Global System for Mobile communications), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), systems that use other adequate systems and/or next-generation systems that are enhanced based on these.

The phrase "based on" as used in this specification does not mean "based only on," unless otherwise specified. In other words, the phrase "based on" means both "based only on" and "based at least on."

Reference to elements with designations such as "first," "second" and so on as used herein does not generally limit the number/quantity or order of these elements. These designations are used only for convenience, as a method for distinguishing between two or more elements. In this way, reference to the first and second elements does not imply that only two elements may be employed, or that the first element must precede the second element in some way.

The terms "judge" and "determine" as used herein may encompass a wide variety of actions. For example, to "judge" and "determine" as used herein may be interpreted to mean making judgements and determinations related to calculating, computing, processing, deriving, investigating, looking up (for example, searching a table, a database or some other data structure), ascertaining and so on. Furthermore, to "judge" and "determine" as used herein may be interpreted to mean making judgements and determinations related to receiving (for example, receiving information), transmitting (for example, transmitting information), inputting, outputting, accessing (for example, accessing data in a memory) and so on. In addition, to "judge" and "determine" as used herein may be interpreted to mean making judgements and determinations related to resolving, selecting, choosing, establishing, comparing and so on. In other words, to "judge" and "determine" as used herein may be interpreted to mean making judgements and determinations related to some action.

As used herein, the terms "connected" and "coupled," or any variation of these terms, mean all direct or indirect connections or coupling between two or more elements, and may include the presence of one or more intermediate elements between two elements that are "connected" or "coupled" to each other. The coupling or connection between the elements may be physical, logical or a combination of these. As used herein, two elements may be considered "connected" or "coupled" to each other by using one or more electrical wires, cables and/or printed electrical connections, and, as a number of non-limiting and non-inclusive examples, by using electromagnetic energy, such as electromagnetic energy having wavelengths in radio frequency regions, microwave regions and optical regions (both visible and invisible).

When terms such as "include," "comprise" and variations of these are used in this specification or in claims, these terms are intended to be inclusive, in a manner similar to the way the term "provide" is used. Furthermore, the term "or" as used in this specification or in claims is intended to be not an exclusive disjunction.

Now, although the present invention has been described in detail above, it should be obvious to a person skilled in the art that the present invention is by no means limited to the embodiments described herein. The present invention can be implemented with various corrections and in various modifications, without departing from the spirit and scope of the present invention defined by the recitations of claims. Consequently, the description herein is provided only for the purpose of explaining examples, and should by no means be construed to limit the present invention in any way.

The disclosure of Japanese Patent Application No. 2016-099288, filed on May 18, 2016, including the specifications, drawings and abstracts, are incorporated herein by reference in their entirety.

## Claims

1. A user terminal comprising:
a transmission section that transmits uplink (UL) data; and
a control section that controls transmission of the UL data based on retransmission control information from a radio base station, wherein
the control section determines a value of a redundancy version (RV) to apply to the UL data transmitted with a same HARQ process number (HPN), based on a given rule, and
the transmission section transmits RV information which indicates the value of the RV, with the UL data.

2. The user terminal according to claim 1, wherein, when a plurality of subframes are scheduled by a single downlink control information (DCI), the transmission section transmits the RV information with the UL data.

3. The user terminal according to claim 1 or claim 2, wherein the transmission section transmits the RV information that is encoded separately from the UL data.

4. The user terminal according to claim 3, wherein the transmission section transmits the RV information that is encoded as part of uplink control information (UCI).

5. The user terminal according to claim 3, wherein, the transmission section transmits the RV information that is encoded separately from uplink control information (UCI).

6. A radio communication method for a user terminal that controls transmission of UL data based on retransmission control information from a radio base station, the radio communication method comprising:
determining a value of a redundancy version (RV) to apply to the UL data transmitted with a same HARQ process number (HPN), based on a given rule; and
transmitting RV information which indicates the value of the RV, with the UL data.
